# EUROPEAN PATENT SPECIFICATION

(11) **EP 3 676 488 B1**
(45) Date of publication and mention of the grant of the patent: **23.11.2022**
(21) Application number: 18756255.8
(22) Date of filing: 24.08.2018
(51) Int. Cl.: F02M 25/08, B60K 15/035, F02D 41/22, F02D 41/00, B60K 15/03

(54) **SYSTEM AND METHOD FOR VARIATION OF THE OPENING SPEED OF A FUEL TANK VALVE**
SYSTEM UND VERFAHREN ZUR VARIATION DER ÖFFNUNGSGESCHWINDIGKEIT EINES KRAFTSTOFFTANKVENTILS
SYSTÈME ET PROCÉDÉ PERMETTANT D'AJUSTER LA VITESSE D'OUVERTURE D'UNE VANNE DE RÉSERVOIR DE CARBURANT

(30) Priority: 29.08.2017 EP 17306108
(43) Date of publication of application: 08.07.2020
(73) Proprietor: Plastic Omnium Advanced Innovation and Research, 1130 Bruxelles (BE)
(72) Inventor: GUIRY, Mitoun, 1120 Bruxelles (BE); HILL, David, 1130 BRUXELLES (BE)
(74) Representative: LLR
(86) International application number: PCT/EP2018/072934
(87) International publication number: WO 2019/042903

(56) References cited:
- WO-A1-2017/043208
- DE-T5-112015 004 004
- DE-T5-112015 004 004
- GB-A- 2 510 302
- KR-B1- 100 717 949
- KR-B1- 100 717 949
- US-B2- 8 118 011
- US-B2- 8 627 802
- US-B2- 9 732 685
- US-B2- 9 732 685

## Description

### Technical field of the invention

The invention is related to isolation valves for fuel tanks in the automotive industry

### Background of the invention

Fuel tank vapor and emission control systems are used to control the flow of fuel vapors from a vehicles fuel tank and also to control the relative pressure of the fuel tank. Vapors are vented to a canister or another vapor control structure, where hydrocarbon vapors are stored and which is also connected to the engine air inlet.

Fuel tanks produce fuel vapor during various operating phases and theses vapors are directed to a canister or another component responsible for storing them, and then purging them regularly to the admission header of the engine. Periodic purging of stored vapors is necessary during the operation of the vehicle. In order to control the purge, the fuel system is operated to control the flow of vapor from the storage canister to the engine air inlet, and atmospheric air is admitted to purge the canister.

The document US2010/0051116 assigned to Eaton Corporation discloses a vapor isolation valve in fluid communication with a fuel tank. The valve acts as a two-stage exit flow mechanism when venting high pressure from the fuel tank to an exit passage. An inconvenience is that when the pressure difference is high, the switch between the two stages may be too sudden resulting in corking.

Document DE 11 2015 004004 discloses a method for reducing the fuel tank internal pressure to a pressure allowing refueling.

### Summary of the invention

It is an object of the present invention to provide good assembly or methods for reducing the risk of corking or clogging, to improve the customer interface with the vehicle during a refuelling operation in extreme conditions and avoid expulsion of fuel toward the operator while opening the fuel cap.

The above objective is accomplished by a method for controlling the opening speed of a valve connected between a fuel tank and a filter, and configured to relieve the pressure inside the fuel tank into the filter, the method comprising the steps of:
- Measuring a pressure in the fuel tank,
- Measuring or inferring a fuel vapor temperature in the fuel tank,
- Calculating an opening speed of the valve as a function of data stored in look-up tables, the pressure and the fuel vapor temperature in the fuel tank,
- Opening the valve at the calculated opening speed in order to avoid corking of another valve of the fuel tank connected between the valve and the fuel tank.

The step of opening may include an electronically operating of the valve in order to open the valve at different opening rates. By iterating the method it is possible to optimize the opening speed of the valve.

The opening rates according to the method are preferably comprised in the range between 0 and 3.3 millimeter(s) per second.

According to a preferred embodiment, the valve is operated with a stepper motor.

According to a further embodiment, the method further comprises a step of filtering the fuel vapor relieved from the valve in order to capture fuel particles.

According to another embodiment, the method further comprises a step of returning filtered fuel vapor to the valve to release latter in the atmosphere.

Another objective of the invention is accomplished by a method of opening a fuel door, accessible by an operator, of a fuel tank which is provided with locking means controlling the opening of the fuel door, the method comprising the step of:
- Monitoring a refuelling request of the operator;
- Performing the hereinbefore method for controlling the opening speed of a valve so as to open the valve at the calculated speed;
- Comparing the pressure in the fuel tank to a predefined pressure value so as to determine if the fuel door can be opened, by unlocking the locking means, without risk for the operator.

Thus, the tank is only available for refuelling when the pressure is inferior to a predefined pressure value over which there is a risk that the fuel exits through the fuel door opening when the fuel door is opened.

According to a further embodiment, when pressure in the fuel tank is inferior to the predefined pressure value, the method comprises the steps of unlocking a locking element and of setting the valve at a completely opened position in order to facilitate a refuelling of the fuel tank.

According to an embodiment, the predefined pressure value is between 20 and 60 mbar, preferably between 45 and 55 mbar, and most preferably 50 mbar. These values are selected for operator/user security according to customer specification.

According to yet a further embodiment, when the pressure in the fuel tank is superior to the predefined pressure value, and when the time since the last refuelling request is superior to a predefined time value, the method comprises a further step of sending a signal informing of the pressure status to the operator, and then a step of unlocking a locking element. Thus, the operator/user is informed and may take the vehicle to a garage for repair and/or maintenance.

According to a preferred embodiment, the predefined time value is 20 seconds. This is the time it takes for a driver to reach the fuel door when he has left his seat.

The herein disclosed methods can be performed by means of a computer program product comprising code means configured to enable the controller to carry out the method.

The above disclosed objects can be obtained by means of an assembly for an automotive vehicle comprising a fuel tank provided with locking means and a fuel tank door, a controller provided with look-up tables, a filter, a temperature sensor for measuring the temperature of the vapor in the fuel tank, a pressure sensor for measuring the pressure in the fuel tank, the temperature sensor and the pressure sensor being connected to the controller, a valve that can be opened and closed at varying opening speed, the valve being connected to the fuel tank on one side and to the filter on the other side, the filter being connected to an engine intake manifold, the controller being able to calculate a suitable opening speed for the valve as a function of values received from the temperature sensor, the pressure sensor and data stored in the look-up tables, the valve being adapted to be opened at various opening and closing speed calculated by the controller, the valve being able to receive and transfer vapors to the filter and air to the atmosphere.

According to an embodiment of the assembly, the valve is an electronically operated valve capable of opening at different rates, e.g. the valve is operated by a stepper motor.

According to a further embodiment of the assembly, the temperature sensor is located in the fuel tank. When the temperature sensor is located in the tank it is easier to obtain precise data concerning the temperature.

According to yet a further embodiment, the fuel tank is provided with a level sensor.

An advantage of having a level sensor is that it can be used to further fine-tune the opening speed of the valve.

Particular and preferred aspects of the invention are set out in the accompanying independent and dependent claims.

Although there has been constant improvement, change and evolution of devices in this field, the present concepts are believed to represent substantial new and inventive improvements, including departures from prior practices, resulting in the provision of more efficient, stable and reliable devices of this nature.

A further advantage is that the herein disclosed method and assembly prevents damage to and prolong the life expectancy of the fuel systems and particularly the venting valves.

### Brief description of the drawings

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.
Fig. 1 is a schematic illustration of a fuel valve system for a fuel tank comprising the assembly according to the invention.
Fig. 2 is a flow chart illustrating the method according to the invention.
Fig. 3 is an example of a look-up table used by the assembly and method according to the invention.
Fig. 4 is a graph showing the variation of pressure P in the same fuel tank with a conventional all-or-nothing valve and with a fuel valve system according to the invention as a function of the time T.
Fig. 5 is a graph showing the aperture A rate of a conventional all-or-nothing valve and of a fuel valve system according to the invention as a function of the time T permitting to obtain the Fig. 4.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms "first, second, third" and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Similarly, it is to be noticed that the term "coupled", also used in the claims, should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment.

In the description provided herein, numerous specific details are set forth.

However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

The term "fuel tank" is understood to mean an impermeable tank that can store fuel under diverse and varied environmental and usage conditions. An example of this tank is that with which motor vehicle is equipped.

The term "Corking" or "Clogging" is understood to define what happens when the force of the rushing fuel vapors physically lifts the float of the valve against the seat, thereby blocking free vapor exit. Or in other words the pressure drop across the float valve is high enough to create a relative vacuum at the outlet port which pulls the float up against the valve seat.

The Malfunction Indicator Lamp (MIL) or CHECK ENGINE light as it is more commonly called, is essentially an emission warning light. If the light comes on, it means the Onboard Diagnostics II system (OBD II) has detected an emissions-related problem.

The term "On-board diagnostics" (OBD) designates an automotive term referring to a vehicle's self-diagnostic and reporting capability. OBD systems give the vehicle owner or repair technician access to the status of the various vehicle subsystems.

The terms "Refuelling" or "fuelling request" indicate both a request to fill the fuel tank with fuel.

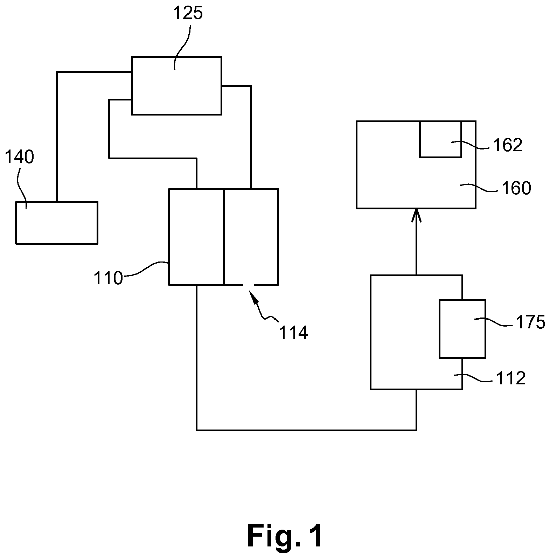

Fig.1 discloses an assembly comprising a valve 110 for a fuel tank. The assembly comprises the valve 110, a filter 125, a controller 160 provided with look-up tables 162, and a fuel tank 112 provided with a fuel door 175 and locking means. The function of the locking means is to keep the fuel door 175 closed. The fuel tank 112 is provided with means for measuring the pressure (not shown) and means for measuring the temperature (not shown) of the vapor in the fuel tank. The fuel tank 112 is also provided with means for detecting a refuelling request (not shown). The fuel tank 112 may be provided with means for measuring other parameters in the fuel tank such as the liquid fuel level in the tank.

The fuel tank 112 is connected to the valve 110, preferably a stepper valve. A stepper valve is composed of two separate chambers, a first chamber and a second chamber. The first chamber is separated from the second chamber by a seal that interfaces with a sliding shaft that drives the two valve poppets in such a way that when the first chamber is open the second chamber is completely closed and vice-versa. A stepper valve is disclosed in the document US9616744. However, the method according to the invention could function with another valve or a set of valves that provide the function of precisely controlling air flow through a valve, for example with only one selective sealing interface.

The valve 110 is on a side opposite of the fuel tank 112 connected to the filter 125, preferably a charcoal filter, also called canister. The filter is connected to engine intake manifold 140. The valve 110 is connected to the controller 160 and is configured to move between an opened position and a closed position in response to an electronic signal from the controller 160. The valve 110 may be located or mounted directly on the fuel tank 112 or may be mounted remotely. Additional components, such as, without limitation, additional valves (not shown) or passageways (not shown) may be interspersed between the fuel tank 112 and the valve 110. An exit passage 114 is in communication with the vehicle's evaporative system (not shown) and may be referred to as the vent path as this is the path for venting or relieving excess fuel vapor from the fuel tank 112.

The fuel tank 112 is connected to the controller 160 provided with look-up tables 162. The controller 160 is connected to the valve 110. The look-up tables 162 are provided with information regarding suitable opening speeds of the valve 110 for specific combinations of temperature and of pressure of the fuel vapor in the fuel tank. The controller 160 is provided with means for instructing the valve 110 to open and close at predefined speed rates according to information received from the means for measuring the pressure in the fuel tank 112 and the means for measuring the temperature in the fuel tank 112.

According to a further embodiment, the means for measuring the temperature are located somewhere else in the vehicle and the look-up table is adapted to use data from said means for measuring temperature to deduce the temperature in the tank.

One or more of the following means may be used as locking element between the fuel tank and space accessible to the operator: a fuel flap, a fuel cap, a closure mechanism.

When the motor is running, the valve 110 receives vapors provided with fuel particles from the tank and transfers those vapors to the filter 125, that captures the fuel particles and return clean vapors to the valve 110. The valve 110 then forwards some of the clean vapors to the atmosphere through the exit 114 and returns some to the fuel tank 112.

The valve 110 is gradually opened and closed as a function of the pressure and the temperature of the vapors in the fuel tank 112.

As the fuel tank 112 heats up the gas comprising fuel, vapor and air expands. In order to avoid an overpressure, that could lead to an explosion, the fuel tank 112 has to be vented. The gas is vented through the valve 110 to the filter 125. The activated carbon in the filter 125 captures the vapor. When the engine is running, the filter 125 is regularly cleaned by means of a vacuum created from the manifold in order to partly reverse the above flow, i.e. to suck the fuel vapors into the engine, thus the clean air is returned to the atmosphere through the valve 110 and the exit 114. Normally, the fuel tank 112 only supplies fuel vapors under short time periods as an underpressure is created due to the presence of these vapors, that are let out by the valve 110. The architecture of the valve 110 provided with the exit passage 114 enables to provide the clean air to the atmosphere instead of returning it to the fuel tank 112.

By providing a gradual fine-tuned opening speed of the valve 110, the wear on the valve 110 is reduced. The wear on the remainder of the assembly is also reduced by damping transitions between no vapor flows and high vapor flow. The possibility to fine tune the opening of the valve 110 may also reduce the pressure differentials across other valves, such as, without limitation, fill/fuel level vapor valves (FLVV) or grade vent valves (GVV) which are located between the fuel tank 112 and the valve 110. Reducing the pressure differential across, for example, an FLVV, reduces the likelihood that the FLVV will be improperly closed due to corking or clogging.

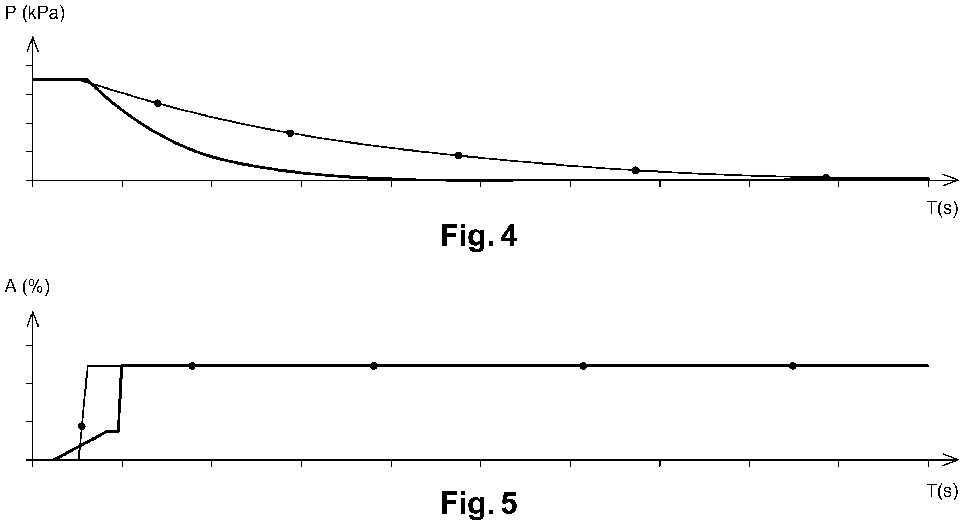

Indeed, as it can be seen in Fig. 5, with a conventional all-or-nothing valve (curve with discs "●"), the opening speed is very quick and whatever the pressure P in the fuel tank, latter is released abruptly. As shown in Fig. 4, this quick opening of the conventional all-or-nothing valve (curve with discs "●") does not mean that the pressure P in the fuel tank will decrease rapidly. Thus, the force of the rushing fuel vapors physically lifts the float of the valve against the seat, thereby blocking free vapor exit. Or in other words, the pressure drop across the float valve is high enough to create a relative vacuum at the outlet port which pulls the float up against the valve seat. Consequently, as it can be seen in Fig. 5, with a conventional all-or-nothing valve (curve with discs "●"), due to corking, the pressure P decreases too slowly in the fuel tank incurring a high risk of expulsion of fuel toward the operator if latter opens the fuel cap.

When the controller 160 recognizes a refuelling request, the controller collects information concerning the pressure and temperature in the fuel tank 112 by means of the temperature sensor and the pressure sensor. The controller uses the look-up table 162 comprising predefined data concerning the relationship between pressure and temperature on one hand and suitable opening speed for the valve 110 in order to calculate a suitable opening speed. Then, the controller sends an electrical signal to the valve 110 instructing the valve 110 to open at the calculated speed.

The controller 160 continues to receive information concerning the pressure in the fuel tank 112 and when the pressure in the fuel tank 112 falls below a preselected pressure value, that is stored e.g. in the look-up table 162, the controller 160 sends a signal to the locking means to unlock the fuel door 175, so the user can start filling the tank.

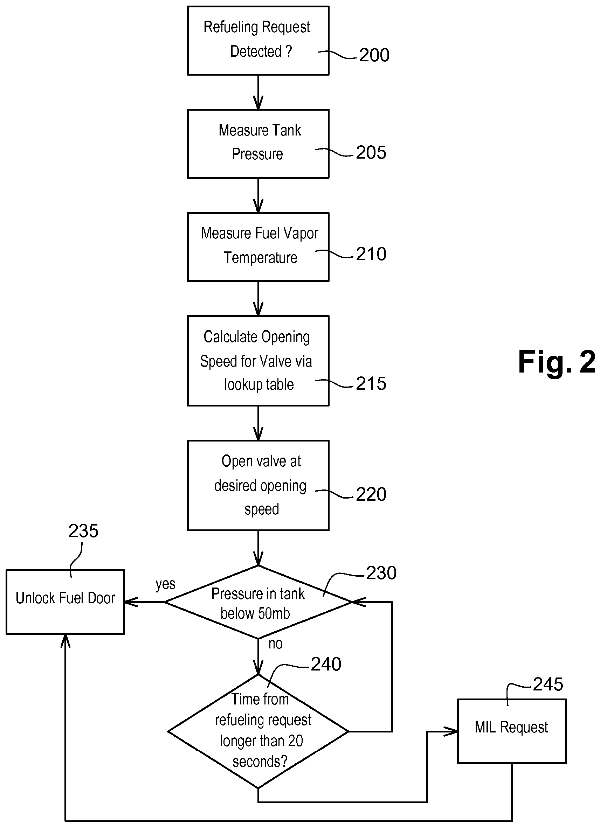

Fig. 2 is a flow chart disclosing the different steps of a method according to the invention. At step 200, the controller 160 detects a refuelling request. A refuelling request is made when an operator chooses to refuel and presses a button in the car to begin the depressurization sequence. The controller 160 is informed about a refuelling request by grabbing a signal from a serial contact - bus of the vehicle. At step 205, the pressure sensor measures the pressure in the fuel tank 112 and sends the measured pressure value to the controller. At step 210, the temperature sensor measures or infers the fuel vapor temperature in the fuel tank and sends the information to the controller 160. At step 215, the controller calculates a suitable opening speed for the valve using the measured temperature, the measured pressure and the look-up table 162. At step 220, the valve is opened at the calculated opening speed, whereupon the fuel tank is depressurized at a desired speed.

At step 230, the pressure value in the tank is measured. If the pressure value lies below a predetermined pressure value, e.g. 50 mbar, the flow goes to step 235 and the locking element of the fuel tank door 175 is unlocked. The user can thus open the fuel door and fill the fuel tank 112 with fuel. The value 50 mbar has been selected as being a suitable pressure balance value for user safety. However, the value is dependent on customer specifications and the height of the filler pipe. A suitable value lies in the range between 20 mbar and 60 mbar, more preferably between 45 mbar and 55 mbar.

If at step 230 the pressure in the fuel tank is higher than the predefined pressure value, the flow goes to step 240. At step 240, the time from the start of the refuelling request is measured. When a predetermined time has elapsed since the refuelling request, e.g. 20 seconds, the flow goes to step 245. The value 20 seconds has been selected as it mimics customer specification, as it is about the time it takes for a user to get out of the car after having stopped the car, and attempt to open the fuel tank door 175 and start the refuelling of the fuel tank 112. At step 245, a notification of fault is sent to the vehicle that can be used to trigger a Mil-request, i.e. a light is activated on the on-board diagnostic display in order to inform the user that the pressure in the fuel tank is too high. Typically, it is the manufacturer who selects the criteria for activating the MIL-lamp. Then the flow goes to step 235 and the locking element of the fuel tank door is unlocked 175. The user can thus open the fuel tank door and fill the fuel tank 112 with fuel.

By preventing the opening of the fuel door when the pressure is under a predefined value, it is possible to limit the risk of fuel exiting the fuel door when the fuel door is opened.

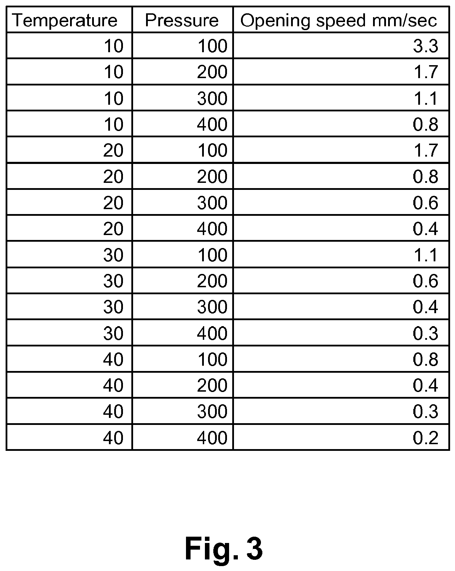

Fig. 3 shows a look-up table used by the method and the assembly according to the invention. It comprises temperature and pressure values and pre-calculated values of opening speed for the valve 110 for each combination of pressure value and temperature value. E.g. when the temperature in the fuel tank is 20°C and the pressure in the fuel tank is 200 mbar, the most suitable opening speed of the valve is considered to be 0,8 millimetre per second.

Of course, the controller 160 can continue to receive information concerning the pressure and the temperature in the fuel tank 112 even after the end of step 220 so that it is able to modify several times the opening speed of the valve 110 during the pressure release from the fuel tank 112 with help of the look-up table 162. This means that method according to the invention, after the answer "no" in step 240, can flow to step 205 instead of step 230 as shown in Fig. 2.

An example of pressure release according to the invention is shown in Figs. 4 and 5. It can be seen that controller 160 instructs the valve to open at two different successive opening speeds (see the two successive slopes in Fig. 5 permitting to show the variation of aperture A of the valve). Thus, by comparing curves of a conventional all-or-nothing valve (curve with discs "●") and curves according to the invention, it can be immediately seen that gradual opening speeds of the valve 100 as function of the temperature and pressure in the fuel tank according to the invention allows the pressure in the fuel tank 112 to fall more rapidly compared to a conventional all-or-nothing valve (more than two times quicker in this example). Consequently, due to the absence of corking, the risk of expulsion of fuel toward the operator if latter opens the fuel cap is highly decreased notably after the predetermined time of 20 seconds.

## Claims

1. Method for controlling the opening speed of a valve (110) connected between a fuel tank (112) and a filter (125), and configured to receive and transfer vapors to the filter and relieve the pressure inside the fuel tank (112) into the filter (125), the method comprising the steps of:
- Measuring (205) a pressure in the fuel tank (112) by a pressure sensor;
- Measuring or inferring a fuel vapor temperature (210) in the fuel tank (112) by a temperature sensor;
- Calculating (215) an opening speed of the valve (110) as a function of data stored in look-up tables (162), the pressure and the fuel vapor temperature in the fuel tank (112);
- Opening (220) the valve (110) at the calculated opening speed in order to avoid corking of another valve of the fuel tank (112) connected between the valve (110) and the fuel tank (112).

2. Method according to the previous claim, wherein the step of opening (220) includes an electronically operating of the valve (110) in order to open the valve (110) at different opening rates.

3. Method according to the previous claim, wherein the opening rates are comprised in the range between 0 and 3,3 mm/s.

4. Method according to any one of the previous claims, wherein the valve (110) is operated with a stepper motor.

5. Method according to any one of the previous claims, further comprising a step of filtering the fuel vapor relieved from the valve (110) in order to capture fuel particles.

6. Method according to the previous claim, further comprising a step of returning filtered fuel vapor to the valve (110) to release latter in the atmosphere.

7. Method according to any one of the previous claims, wherein the look-up tables (162) are provided with information regarding suitable opening speeds of the valve (110) for specific combinations of temperature and of pressure of the fuel vapor in the fuel tank (112).

8. Method of opening a fuel door (175), accessible by an operator, of a fuel tank (112) which is provided with locking means (170) controlling the opening of the fuel door (175), the method comprising the step of:
- Monitoring a refuelling request of the operator ;
- Performing the method according to any one of the previous claims so as to open the valve (110) at the calculated speed;
- Comparing the pressure in the fuel tank (112) to a predefined pressure value so as to determine if the fuel door (175) can be opened, by unlocking the locking means (170), without risk for the operator.

9. Method according to the previous claim, wherein, when the pressure in the fuel tank (112) is inferior to the predefined pressure value, the method further comprises the steps of:
- unlocking (235) the locking element (170);
- setting the valve (170) at a completely opened position in order to facilitate a refuelling of the fuel tank (112).

10. Method according to claim 8, wherein, when the pressure in the fuel tank (112) is superior to the predefined pressure value, and when the time since the last refuelling request is superior to a predefined time value, the method further comprises the steps of:
- sending (245) a signal informing of the pressure status to the operator;
- unlocking (235) the locking element (170).

11. Method according to the previous claim, wherein the predefined time value is 20 seconds.

12. Method according to any of the claims 8 to 11, wherein the predefined pressure value is between 20 and 60 mbar, preferably between 45 and 55 mbar, and most preferably 50 mbar.

13. Assembly for an automotive vehicle comprising a fuel tank (112) provided with locking means and a fuel tank door (175), a controller (160) provided with look-up tables (162), a filter (125), a temperature sensor for measuring the temperature of the vapor in the fuel tank (112), a pressure sensor for measuring the pressure in the fuel tank (112), the temperature sensor and the pressure sensor being connected to the controller (160), a valve (110) that can be opened and closed at varying opening speed, the valve (110) being connected to the fuel tank (112) on one side and to the filter (125) on the other side, the filter (125) being connected to an engine intake manifold, the controller (160) being configured to calculate a suitable opening speed for the valve as a function of values received from the temperature sensor, the pressure sensor and data stored in the look-up tables, the valve being adapted to be opened at various opening and closing speed calculated by the controller, the valve being able to receive and transfer vapors to the filter (125) and air to the atmosphere.

14. Assembly according to the previous claim, the valve (110) being an electronically driven valve capable of opening at different rates, e.g. the valve being driven by a stepper motor.

15. Assembly according to any of claims 13 to 14, the temperature sensor being located in the fuel tank (112).

16. Assembly according to any of claims 13 to 15, the fuel tank (112) being provided with a level sensor.

## Patentansprüche

1. Verfahren zum Steuern der Öffnungsgeschwindigkeit eines Ventils (110), das zwischen einem Kraftstofftank (112) und einem Filter (125) angeschlossen ist und so konfiguriert ist, dass es Dämpfe aufnimmt und zu dem Filter überträgt und den Druck innerhalb des Kraftstofftanks (112) in den Filter (125) hinein entlastet, wobei das Verfahren die folgenden Schritte umfasst:
- Messen (205) eines Drucks in dem Kraftstofftank (112) durch einen Drucksensor;
- Messen oder Ableiten einer Kraftstoffdampftemperatur (210) im Kraftstofftank (112) durch einen Temperatursensor;
- Berechnen (215) einer Öffnungsgeschwindigkeit des Ventils (110) als eine Funktion von in Nachschlagetabellen (162) gespeicherten Daten, des Drucks und der Kraftstoffdampftemperatur im Kraftstofftank (112);
- Öffnen (220) des Ventils (110) mit der berechneten Öffnungsgeschwindigkeit, um ein Zupfropfen eines anderen Ventils des Kraftstofftanks (112) zu vermeiden, das zwischen dem Ventil (110) und dem Kraftstofftank (112) angeschlossen ist.

2. Verfahren nach dem vorhergehenden Anspruch, wobei der Schritt des Öffnens (220) eine elektronische Betätigung des Ventils (110) umfasst, um das Ventil (110) mit unterschiedlichen Öffnungsraten zu öffnen.

3. Verfahren nach dem vorhergehenden Anspruch, wobei die Öffnungsraten im Bereich zwischen 0 und 3,3 mm/s liegen.

4. Verfahren nach einem der vorhergehenden Ansprüche, wobei das Ventil (110) mit einem Schrittmotor betrieben wird.

5. Verfahren nach einem der vorhergehenden Ansprüche, das ferner einen Schritt des Filterns des aus dem Ventil (110) abgelassenen Kraftstoffdampfes umfasst, um Kraftstoffpartikel aufzufangen.

6. Verfahren nach dem vorhergehenden Anspruch, das ferner einen Schritt der Rückführung von gefiltertem Kraftstoffdampf zum Ventil (110) umfasst, um diesen in die Atmosphäre freizusetzen.

7. Verfahren nach einem der vorhergehenden Ansprüche, wobei die Nachschlagetabellen (162) mit Informationen über geeignete Öffnungsgeschwindigkeiten des Ventils (110) für bestimmte Kombinationen von Temperatur und Druck des Kraftstoffdampfes im Kraftstofftank (112) versehen sind.

8. Verfahren zum Öffnen einer von einem Bediener zugänglichen Kraftstofftür (175) eines Kraftstofftanks (112), der mit Verriegelungsmitteln (170) versehen ist, die das Öffnen der Kraftstofftür (175) steuern, wobei das Verfahren die folgenden Schritte umfasst:
- Überwachung einer Betankungsanforderung des Bedieners;
- Ausführen des Verfahrens nach einem der vorhergehenden Ansprüche, um das Ventil (110) mit der berechneten Geschwindigkeit zu öffnen;
- Vergleichen des Drucks im Kraftstofftank (112) mit einem vordefinierten Druckwert, um zu bestimmen, ob die Kraftstofftür (175) durch Entriegeln der Verriegelungsmittel (170) ohne Risiko für den Bediener geöffnet werden kann.

9. Verfahren nach dem vorhergehenden Anspruch, wobei, wenn der Druck im Kraftstofftank (112) unter dem vordefinierten Druckwert liegt, das Verfahren ferner die folgenden Schritte umfasst::
- Entriegeln (235) des Verriegelungselements (170);
- Einstellen des Ventils (170) in eine vollständig geöffnete Position, um ein Betanken des Kraftstofftanks (112) zu erleichtern.

10. Verfahren nach Anspruch 8, wobei, wenn der Druck im Kraftstofftank (112) höher als der vordefinierte Druckwert ist und wenn die Zeit seit der letzten Betankungsanforderung höher als ein vordefinierter Zeitwert ist, das Verfahren ferner die folgenden Schritte umfasst:
- Senden (245) eines Signals, das über den Druckstatus informiert, an den Bediener;
- Entriegeln (235) des Verriegelungselements (170).

11. Verfahren nach dem vorhergehenden Anspruch, wobei der vordefinierte Zeitwert 20 Sekunden beträgt.

12. Verfahren nach einem der Ansprüche 8 bis 11, wobei der vordefinierte Druckwert zwischen 20 und 60 mbar, vorzugsweise zwischen 45 und 55 mbar liegt und am meisten bevorzugt 50 mbar beträgt.

13. Baugruppe für ein Kraftfahrzeug aufweisend einen Kraftstofftank (112), der mit Verriegelungsmitteln und einer Kraftstofftür (175) versehen ist, ein Steuergerät (160), das mit Nachschlagetabellen (162) versehen ist, ein Filter (125), ein Temperatursensor zum Messen der Temperatur des Dampfes in dem Kraftstofftank (112), ein Drucksensor zum Messen des Drucks in dem Kraftstofftank (112), wobei der Temperatursensor und der Drucksensor mit dem Steuergerät (160) verbunden sind, ein Ventil (110), das mit unterschiedlicher Öffnungsgeschwindigkeit geöffnet und geschlossen werden kann, wobei das Ventil (110) auf der einen Seite mit dem Kraftstofftank (112) und auf der anderen Seite mit dem Filter (125) verbunden ist, wobei der Filter (125) mit einem Motoreinlasskrümmer verbunden ist, wobei das Steuergerät (160) so konfiguriert ist, dass es eine geeignete Öffnungsgeschwindigkeit für das Ventil als eine Funktion von Werten berechnet, die von dem Temperatursensor, dem Drucksensor und Daten, die in den Nachschlagetabellen gespeichert sind, empfangen werden, wobei das Ventil so angepasst ist, dass es mit verschiedenen Öffnungs- und Schließgeschwindigkeiten, die von dem Steuergerät berechnet werden, geöffnet werden kann, wobei das Ventil in der Lage ist, Dämpfe zu empfangen und zu dem Filter (125) und Luft zu der Atmosphäre zu übertragen.

14. Baugruppe nach dem vorhergehenden Anspruch, wobei das Ventil (110) ein elektronisch angetriebenes Ventil ist, das sich mit unterschiedlichen Geschwindigkeiten öffnen kann; z.B. wird das Ventil durch einen Schrittmotor angetrieben.

15. Anordnung nach einem der Ansprüche 13 bis 14, wobei der Temperatursensor im Kraftstofftank (112) angeordnet ist.

16. Anordnung nach einem der Ansprüche 13 bis 15, wobei der Kraftstofftank (112) mit einem Füllstandsensor versehen ist.

## Revendications

1. Procédé de contrôle de la vitesse d'ouverture d'une soupape (110) reliée entre un réservoir de carburant (112) et un filtre (125), et configuré pour recevoir et transférer des vapeurs vers le filtre et libérer la pression à l'intérieur du réservoir de carburant (112) dans le filtre (125), le procédé comprenant les étapes suivantes :
- Mesure (205) d'une pression dans le réservoir de carburant (112) par un capteur de pression ;
- Mesurer ou déduire une température de ciel gazeux de carburant (210) dans le réservoir de carburant (112) à l'aide d'un capteur de température ;
- Calcul (215) d'une vitesse d'ouverture de la soupape (110) en fonction des données stockées dans des tableaux de référence (162), de la pression et de la température de ciel gazeux de carburant dans le réservoir de carburant (112) ;
- Ouverture (220) de la soupape (110) à la vitesse d'ouverture calculée afin d'éviter la fermeture d'une autre soupape du réservoir de carburant (112) reliée entre la soupape (110) et le réservoir de carburant (112).

2. Procédé selon la revendication précédente, dans lequel l'étape d'ouverture (220) comprend une gestion électronique de la vanne (110) afin d'ouvrir la vanne (110) à des taux d'ouverture différents.

3. Procédé selon la revendication précédente, dans lequel les taux d'ouverture sont compris dans la plage comprise entre 0 et 3,3 mm/s.

4. Procédé selon l'une quelconque des revendications précédentes, dans lequel la vanne (110) est actionnée avec un moteur pas-à-pas.

5. Procédé selon l'une quelconque des revendications précédentes, comprenant en outre une étape de filtrage du ciel gazeux de carburant libéré de la soupape (110) afin de capturer les particules de carburant.

6. Procédé selon la revendication précédente, comprenant en outre une étape de retour de ciel gazeux de carburant filtrée dans la soupape (110) pour libérer cette dernière dans l'atmosphère.

7. Procédé selon l'une quelconque des revendications précédentes, dans lequel les tableaux de référence (162) sont fournis avec des informations concernant les vitesses d'ouverture appropriées de la soupape (110) pour des combinaisons spécifiques de température et de pression du ciel gazeux de carburant dans le réservoir de carburant (112).

8. Procédé d'ouverture d'une trappe à carburant (175), accessible par un opérateur, d'un réservoir de carburant (112) muni de moyens de verrouillage (170) contrôlant l'ouverture de la trappe à carburant (175), le procédé comprenant l'étape de :
- Surveillance d'une demande de ravitaillement de l'opérateur ;
- Mise en œuvre le procédé selon l'une quelconque des revendications précédentes de manière à ouvrir la vanne (110) à la vitesse calculée ;
- Compararaison de la pression dans le réservoir de carburant (112) par rapport à une valeur de pression prédéfinie afin de déterminer si la trappe à carburant (175) peut être ouverte, en déverrouillant les moyens de verrouillage (170), sans risque pour l'opérateur.

9. Procédé selon la revendication précédente, dans lequel, lorsque la pression dans le réservoir de carburant (112) est inférieure à la valeur de pression prédéfinie, le procédé comprend en outre les étapes de :
- déverrouillage (235) de l'élément de verrouillage (170) ;
- régler la soupape (170) en position complètement ouverte afin de faciliter le ravitaillement du réservoir de carburant (112).

10. Procédé selon la revendication 8, dans lequel, lorsque la pression dans le réservoir de carburant (112) est supérieure à la valeur de pression prédéfinie, et lorsque le temps écoulé depuis la dernière demande de ravitaillement est supérieur à une valeur de temps prédéfinie, le procédé comprend en outre les étapes de :
- envoi (245) d'un signal informant de l'état de pression à l'opérateur ;
- déverrouillage (235) de l'élément de verrouillage (170).

11. Procédé selon la revendication précédente, dans lequel la valeur de temps prédéfinie est de 20 secondes.

12. Procédé selon l'une quelconque des revendications 8 à 11, dans lequel la valeur de pression prédéfinie est comprise entre 20 et 60 mbar, de préférence entre 45 et 55 mbar, et de manière préférée 50 mbar.

13. Assemblage pour un véhicule automobile comprenant un réservoir de carburant (112) muni de moyens de verrouillage et d'une trappe à carburant (175), un contrôleur (160) muni de tableaux de référence (162), d'un filtre (125), un capteur de température pour la mesure de la température du ciel gazeux dans le réservoir de carburant (112), un capteur de pression pour mesurer la pression dans le réservoir de carburant (112), le capteur de température et le capteur de pression étant connectés au contrôleur (160), une soupape (110) qui peut être ouverte et fermée à une vitesse d'ouverture variable, la soupape (110) étant connectée au réservoir de carburant (112) d'un côté et au filtre (125) de l'autre côté, le filtre (125) étant relié à un collecteur d'admission d'un moteur, le contrôleur (160) étant configuré pour calculer une vitesse d'ouverture appropriée pour la soupape en fonction des valeurs reçues du capteur de température, du capteur de pression et des données stockées dans les tableaux de référence, la vanne étant adaptée pour être ouverte à différentes vitesses d'ouverture et de fermeture calculées par le contrôleur, la vanne étant capable de recevoir et de transférer les vapeurs dans le filtre (125) et de l'air dans l'atmosphère.

14. Assemblage selon la revendication précédente, la vanne (110) étant une soupape à entraînement électronique capable de d'ouvrir à différentes vitesses, comme par exemple une vanne entraînée par un moteur pas-à-pas.

15. Assemblage selon l'une quelconque desrevendications 13 à 14, le capteur de température étant situé dans le réservoir de carburant (112).

16. Assemblage selon l'une quelconque desrevendications 13 à 15, le réservoir de carburant (112) étant muni d'un capteur de niveau.
